# EUROPEAN PATENT SPECIFICATION

(11) **EP 2 481 616 B1**
(45) Date of publication and mention of the grant of the patent: **06.11.2019**
(21) Application number: 10818540.6
(22) Date of filing: 17.09.2010
(51) Int. Cl.: B60H 1/00, B60H 1/22, B60N 2/02, B60N 2/56, B60N 2/58

(54) **SEAT HEATING DEVICE AND VEHICLE WITH SAME**
SITZERWÄRMUNGSVORRICHTUNG UND FAHRZEUG DAMIT
DISPOSITIF DE CHAUFFAGE POUR SIÈGE ET VÉHICULE ÉQUIPÉ DE CELUI-CI

(30) Priority: 24.09.2009 JP 2009218452; 08.01.2010 JP 2010002529
(43) Date of publication of application: 01.08.2012
(73) Proprietor: Panasonic Intellectual Property Management Co., Ltd., Osaka-shi, Osaka 540-6207 (JP)
(72) Inventor: OGINO, Hiroyuki, Osaka 540-6207 (JP); ABE, Norio, Osaka 540-6207 (JP); ABE, Yukio, Osaka 540-6207 (JP); YOSHIMOTO, Koji, Osaka 540-6207 (JP)
(74) Representative: SSM Sandmair
(86) International application number: PCT/JP2010/005676
(87) International publication number: WO 2011/036860

(56) References cited:
- EP-A1- 2 000 355
- DE-B3-102005 038 972
- JP-A- H01 164 620
- JP-A- 2009 113 620
- JP-A- 2009 113 620
- JP-U- H0 435 033
- JP-U- H0 435 033
- JP-U- S6 043 434
- JP-U- 60 043 434

## Description

### TECHNICAL FIELD

This invention relates to a seat heating device to be installed on a seat of a vehicle or the like for warming up feet of a passenger sitting in a back seat.

### BACKGROUND ART

In recent years, development of an energy conservation vehicle such as a fuel-efficient car, a hybrid car and an electric car is being progressed. With this trend, a vehicle equipped with an energy-saving heater is demanded with which a passenger can comfortably spend even in a winter season. To meet such a demand, a seat heating device in which engine cooling water is supplied to a radiation panel installed in a rear side of a front seat is disclosed (below patent literature 1 is referred to, as an example). Following, the seat heating device utilizing the engine cooling water is explained by referring to Fig, 7.

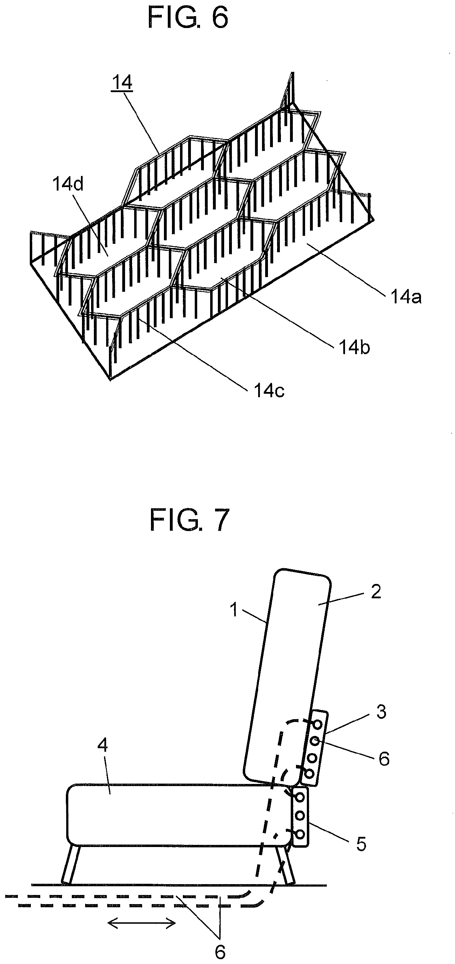

Fig. 7 is a cross section view of a conventional seat heating device. Fig. 7 shows that the conventional seat heating device includes upper side radiation panel 3 disposed on a lower rear side of seat back 2 of seat 1 and lower side radiation panel 5 disposed on a rear side of seat part 4 of seat 1. Upper radiation panel 3 irradiates radiant heat to lower legs of passenger, and lower radiation panel 5 irradiates radiant heat to feet of the passenger. Warm water supply pipe 6 is laid out in upper radiation panel 3 and in lower radiation panel 5 for circulating engine cooling water.

With the conventional configuration, a certain time period is required for warming up water to be circulated in warm water supply pipe 6, causing an insufficient heating right after boarding in a winter season. Further, since warm water supply pipe 6 is laid out in certain place of the vehicle, it requires a labor. Still further, in this conventional configuration, the radiation panel is divided into upper radiation panel 3 and lower radiation panel 5 so as the seat may be reclined. Upper panel 3 and lower panel 5 integrated into one piece may be broken when seat is reclined, causing water leakage.

JP-A-2009113620 discloses a heater material that is allocated in/at a tray, can be attached and detached, and is planar. JP-A-2009113620 also discloses that the tray is allocated at a plane of front seat in a vehicle, the plane facing to back seat, and is able to be housed. When a passenger at the back seat uses the tray, the heater material that is planar can heat crural area of the passenger at the back seat.

### Citation List

### Patent Literature

PTL1 : Unpublished Japanese Patent Publication No. 2008-254665
PTL2 : JP-A-2009113620

### SUMMARY OF THE INVENTION

The seat heating device of the present invention comprises the features of claim 1. With this configuration, radiant heating of lower legs and feet of a back seat passenger is made possible with only a single heater. Since the cover conceals a gap between the seat back and the seat part, a good external appearance is maintained.

### BRIEF DESCRIPTION OF DRAWINGS

Fig. 1 is a cross section view of a seat installing a seat heating device in accordance with a first comparative example which is not part of the present invention.
Fig. 2 is a cross section view of a cover, a heater, and an insulator of the seat heating device in accordance with the first comparative example which is not part of the present invention.
Fig. 3A is a cross sectional view of a seat installing the seat heating device in accordance with the first comparative example which is not part of the present invention, in which a seat back is reclined forwardly.
Fig. 3B is a cross sectional view of a seat installing the seat heating device in accordance with the first comparative example which is not part of the present invention, in which a seat back is reclined backwardly.
Fig. 4A is a perspective view of a seat cover of a seat heating device in accordance with a second comparative example which is not part of the present invention in which a seat back is not yet covered with a cover.
Fig. 4B is a perspective view of the seat back of the seat heating device in accordance with the second comparative example which is not part of the present invention which is covered with the cover.
Fig. 5A is a perspective view of a cover of a seat heating device in accordance with a first exemplary embodiment of the present invention.
Fig. 5B is a cross section view of the cover of the seat heating device in accordance with the first exemplary embodiment of the present invention.
Fig. 6 is a perspective view of a section of a radiant transmission part of the seat heating device in accordance with the first exemplary embodiment of the present invention.
Fig. 7 is a perspective view of a conventional seat heating device.
Fig. 8 is a depicted view of a vehicle equipped with the seat heating device in accordance with the first comparative example which is not part of the present invention.

### DESCRIPTION OF EMBODIMENTS

### FIRST COMPARATIVE EXAMPLE

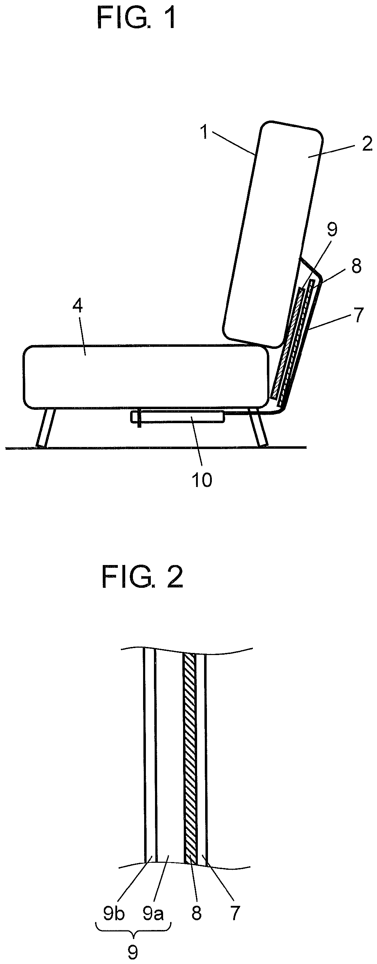

Fig. 1 is a cross sectional view of a seat installing a seat heating device in accordance with a first comparative example which is not part of the present invention.

As is shown in Fig. 1, the seat heating device is composed of seat 1 composed of seat back 2 and seat part 4, heater 8 placed on a rear side of seat back 2 (an opposite side to sitting direction in seat 1) through a bottom side of seat part 4, cover 7, heat insulator 9, and elastic member 10. An end of cover 7 is attached to a cover cloth in a rear side of seat back 2 and an other end of which is attached to a bottom of seat part 4 through elastic member 10, covering heater 8.

Elastic member 10 is made of a rubber string, for instance and is hooked to a bottom of seat part 4 or is hooked directly to a cushion spring at the bottom of seat part 4, fixing cover 7.

As described, in the seat heating device according to the comparative example, heater 8 is disposed on the rear side of seat back 2 continued to the rear side of seat part 4, and heater 8 is covered by cover 7. With this configuration, cover 7 is heated by heater 8 to a high temperature, emitting a radiant heat from a surface of cover 7 (from an opposite side to seat back 2) to a back seat. Thus, radiant heating of the lower legs (from a knee to an ankle) through the foot (the ankle and below) of the back seat passenger is made possible with a single heater 8. Since cover 7 hides a gap between seat back 2 and seat part 4, a good external appearance is maintained. The seat heating device according to the exemplary embodiment is installed in a vehicle such as a fuel-efficient car, a hybrid car, an electric car, and an aircraft.

Fig, 2 is a cross section view of cover 7, heater 8, and heat insulator 9 of the seat heating device in accordance with the first comparative example.

As shown in Fig. 2, cover 7 of the seat heating device contains heater 8 as a heating member and heat insulator 9, facing the side of seat back 2. Heat insulator 9 is made of heat insulating material, urethane 9a for instance. Low friction member 9b is formed by heat-treating a surface of heat insulator 9, the surface facing the rear side of seat back 2. Urethane 9a is preferably a closed cell foam urethane having low heat conductivity. Heater 8 is an electric heater, preferably a PTC (positive temperature coefficient) heater which is flexible and heat-molded into a shape of a sheet. Since PTC heater self-controls temperature, a thermistor or a thermostat is not needed, making the heater slim and placement thereof in cover 7 easy.

In the comparative example, cover 7, heater 8 and heat insulator 9 may or may not be adhesively fixed, but adhesive fixation is preferable as it ensures firmness.

Since the seat heating device according to the comparative example employs the PTC the mistor or the like, less energy is needed for heating the feet of the back seat passenger than what is needed by warm-air heating of a car air-conditioner. It means that a good sensible temperature is maintained with this radiant foot heating by radiating, even when a room temperature is low, It follows that when the device is used for heating a hybrid car, running frequency of the engine for heating is reduced. More specifically, energy needed for running radiant heating is ordinarily several tens watts, while energy needed for warm-air heating is several hundred watts to several thousand watts, saving at least several hundred watts, thus fuel efficiency is improved by the amount. If the device is used for heating an electric car exhausting no heat, it increases cruising distance (mileage) of the car, showing a remarkable efficiency.

Furthermore, if the device is used with a seat heater, with a rear-duct heater which runs with a small amount of air flow, or with an electric floor heater for heating only a limited space to put shoes on, temperature not only around the lower legs and foot but also an ambient temperature is increased fast, further improving comfortability. Engine cooling water may also be utilized as long as it is used in a portion where is not obstructed by the seat reclined. Herewith exhaust heat or other wasting energy may as well be utilized effectively.

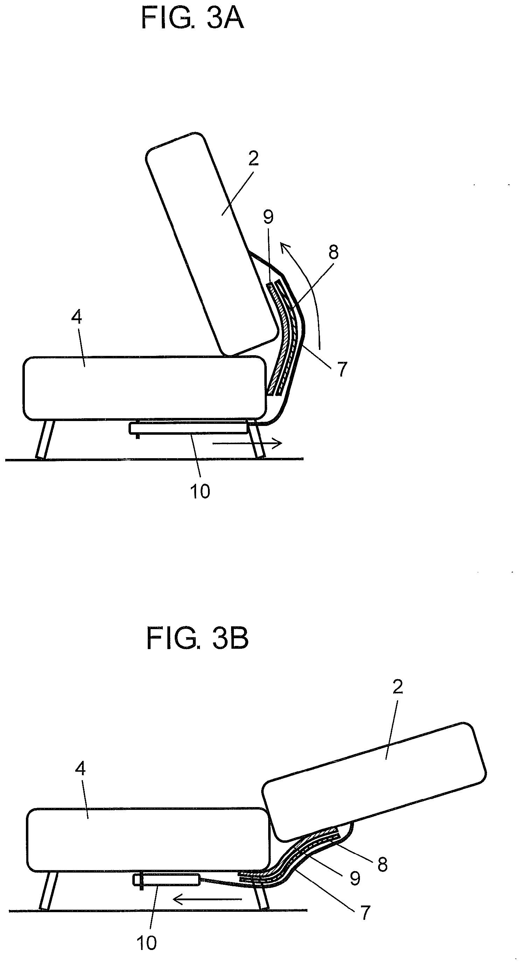

Thus structured seat heating device in a reclined seat will be explained by using Figs. 3A and 3B.

Fig. 3A is a cross sectional view of a seat installing the seat heating device in accordance with the first comparative example, wherein the seat back is forwardly reclined. Fig. 3B is a cross sectional view of a seat installing the seat heating device in accordance with the first comparative example, wherein the seat back is backwardly reclined.

As is shown in Fig. 3A, when seat back 2 is reclined forwardly, cover 7 attached to seat back 2 is pulled up in an arrow direction, and cover 7 moves in the same direction as elastic member 10 is stretched. Flexible heater 8 and heat insulator 9 also move in the same direction. At this time, heat insulator 9 coming into contact with seat material is rubbed with the material (such as urethane and a part of a seat frame), possibly heat insulator 9 being damaged or caught by the material. However, because low friction member 9b is formed on heat insulator 9 on the side facing seat back 2, heat insulator 9 moves smoothly without being peeled off or wearing even when it is contacted by the seat material.

As shown in Fig. 3B, when seat back 2 is reclined backwardly, cover 7 attached to seat back 2 is pulled down in the arrow direction, cover 7 moves in the same direction as elastic member 10 contracts. A similar consequence occurs here as is explained with Fig. 3A.

As explained, with the seat heating device of the comparative example, the one end of cover 7 is fixed to the rear surface of seat back 2 and the other end of cover 7 is fixed to the bottom side of seat part 4 with elastic member 10. In this configuration, when seat back 2 is reclined, cover 7, heater 8 and heat insulator 9 all move together with seat back 2. Since seat back 2 is constantly pulled by elastic member 10, the constituent members are kept tight, not malfunctioning such as catching other seat constituent member. Even if a rear duct is laid under the seat, an air path of the duct is not blocked by loosened cover 7. Accordingly, radiant heating of the lower legs and feet of the back seat passenger is made possible with a single heater.

In this comparative example, low friction member 9b is formed by heat treating the surface of heat insulator 9 the side facing seat back 2, but a different material may be disposed on heat insulator 9 on the side facing seat back 2, obtaining a similar effect.

### SECOND COMPARATIVE EXAMPLE

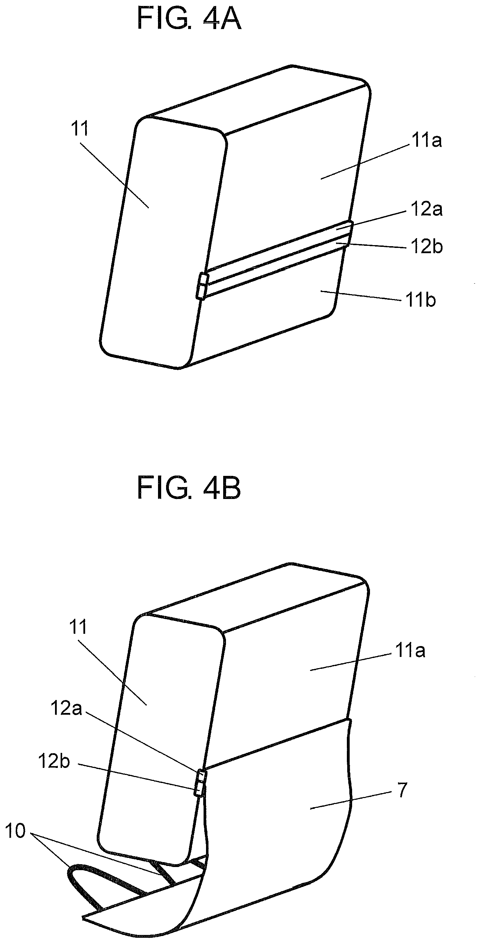

Fig. 4A is a perspective view of seat cover 11 of a seat heating device in accordance with a second comparative example which is not part of the present invention in which seat back 2 is not yet covered with cover 7. Fig. 4B is a perspective view of the seat back 2 of the seat heating device in accordance with the second comparative example which is not part of the present invention which is covered with cover 7. Here, a same reference mark used in the first comparative example is used as long as the constituent part is identical to the one in the first comparative example.

Fig. 4A shows that seat back 2 of the seat heating device is composed of seat cover 11, upper rear surface 11a, lower rear surface 11b, and fitting part 12a and 12b. Seat back 2 of the seat heating device according to the exemplary embodiment is manufactured with following procedure.

First, separate upper rear surface 11a and lower rear surface 11b at fitting part 12a and 12b, and cover a urethane pad (not illustrated) with seat cover 11. Then, fit upper rear surface 11a and lower rear surface 11b together at fitting part 12a and 12b. Upper rear surface 11a and lower rear surface 11b are fixed by sewing fitting part 12a and fitting part 12b.

Then, as shown in Fig. 4B, attach cover 7 to seat back 2 of the seat heating device, and then sew fitting part 12a and 12b including an end of cover 7. At this time, fix an other end of cover 7 to a bottom of seat 1 with elastic member 10. Hence, cover 7 conceals fitting part 12a and 12b, further improving the external appearance in the rear side of the seat.

### FIRST EXEMPLARY EMBODIMENT

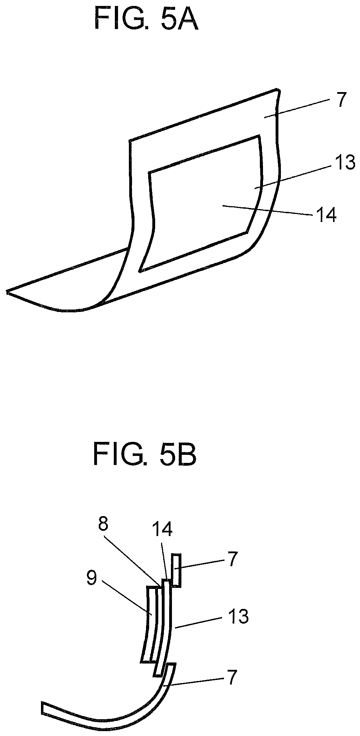

Fig. 5A is a perspective view of cover 7 of the seat heating device in accordance with a first exemplary embodiment of the present invention. Fig. 5B is a cross section view of cover 7 of the seat heating device in accordance with the first exemplary embodiment of the present invention. For a constituent part, a same reference mark used in first comparative exampleis applied in the first exemplary embodiment as long as the part is identical to the one in the first comparative example.

As shown in Fig. 5A, cover 7 of the seat heating device has opening 13, flexible radiant transmission part 14 is disposed thereon covering opening 13 at the least. As shown in Fig. 5B, heater 8 and heat insulator 9 are disposed on radiant transmission part 14, facing a rear side of seat back 2. Radiant transmission part 14 is formed with an open lattice.

With above configuration, radiation heat generated by heater 8 passes through the open lattice of radiant transmission part 14, not passing through cover 7 but irradiating a back seat directly, achieving further efficient heating.

Following, radiant transmission part 14 is specifically explained. Fig. 6 is a perspective view of a section of radiant transmission part 14 of the seat heating device in accordance with the first embodiment of the present invention.

As shown in Fig. 6, radiant transmission part 14 of the seat heating device is composed of first constituent 14a a flexible and a sheet-like form, second constituent 14b a flexible and a mesh-like form having a prescribed opening rate, and a plurality of connecting constituents 14c connecting first constituent 14a and second constituent 14b, yet leaving a space between first constituent 14a and second constituent 14b. Radiant transmission part 14 is preferably a three dimensional fabric in which first constituent 14a, second constituent 14b and connecting constituent 14c are all three-dimensionally fastened with a weaving and knitting yarn. In this particular embodiment, a double raschel fabric (three dimensional structured fabric) as exemplified in Fig. 6 is employed. First constituent 14a is adhesively attached to heater 8, and second constituent 14b is formed with open lattice 14d in a honeycomb structure, facing a back seat.

With above configuration, heater 8 heats up first constituent 14a. First constituent 14a generates radiant heat, irradiating the back seat through open lattice 14d, radiantly heating the passenger's lower legs and feet.

Second constituent 14b is spaciously separated from first constituent 14a by connecting constituent 14c therefore a temperature of constituent 14b is lower than first constituent 14a, and second constituent 14b is a woven and knitted fabric therefore having a smaller heat capacity than a human body does. Accordingly, even when a part of the passenger's body such as an arm or the like touches second constituent 14b, the temperature of the contact surface of second constituent 14b immediately falls down to a neighborhood of the skin temperature, preventing the body at the contact surface to be needlessly heated.

Additionally, since connecting constituent 14c is woven and knitted thread having certain elasticity, even if second constituent 14b is pressed by a palm or a finger, constituent 14c readily restores its original form. Namely, even if second constituent 14b is pushed by a part of the passenger's body, first constituent 14a does not directly touch the body, assuring a safe use of the device.

Still further, even if a finger or other part of the body strongly presses first constituent 14a, since first constituent 14a exists between the finger and heater 8, it prevents the body from touching heater 8 directly. Moreover, since first constituent 14a is formed with woven and knitted fabric having a small heat capacity, therefore the temperature of the contact surface of first constituent 14a drops affected by a temperature of the finger, consequently assuring a much safer use of the device. Height of connecting constituent 14c is set around 4 to 10 mm, for instance. With this height, connecting constituent 14c easily restores its original form even when second constituent 14b is pressed by a palm or a finger. A minimum dimension of opening in open lattice 14 (a shortest diagonal dimension in open lattice 14d) is set around 3 to 6 mm, which a dimension in which a human finger hardly thrust into. These dimensions are not restrictive and are changeable as long as a safety is assured.

Radiant heat generated by first constituent 14a is perpendicularly emitted from the surface of first constituent 14a and passes through open lattice 14d without being hindered. While, radiant heat obliquely emitted from the surface of first constituent 14a is partly intercepted by connecting constituent 14c so is not forwardly emitted from radiant transmission part 14. Therefore, for increasing an efficiency of radiant heating, a space between connecting constituents 14c is preferably made larger to an extent in which connecting constituent 14c easily returns to its original form even when second constituent 14b is depressed by a palm or a finger. More specifically, when forming radiant transmission part 14 by double raschel, a weaving/knitting yarn of as much as high rigidity is selected for threading connecting constituent 14c, such that the space between connecting constituents 14d may become larger. In above explanation, radiant transmission part 14 is formed with double raschel fabric, but radiant transmission part 14 may be formed with other material similar to the double raschel. As an example, radiant transmission part 14 may be composed of first constituent 14a made of a flexible resin sheet, second constituent 14b made of a flexible mesh resin, and connecting constituent 14c made of a resin spacer. If the mesh resin is flocked in this case, it will significantly reduce the thermal effect.

With the seat heating device of the exemplary embodiment, the heater is disposed on the rear side of the seat back continued to the rear side of the seat part, but the heater may be disposed only on the seat back or on the seat part.

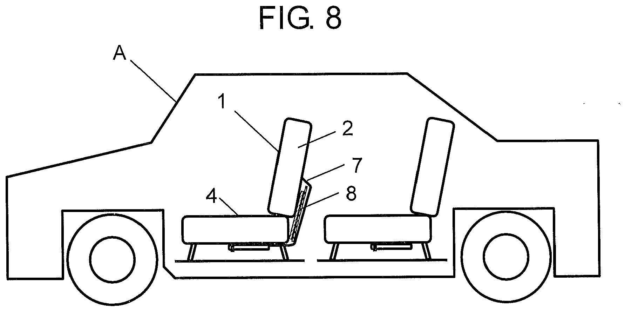

Following, a vehicle equipped with above seat heating device is explained. Fig. 8 is a schematic view of the vehicle equipped with the seat heating device in accordance with the first comparative example of the present invention. A vehicle equipped with the heating device of the second comparative example or the first exemplary embodiment will exhibit a similar effect.

As shown in Fig. 8, the vehicle is installed with the seat heating device composed of cover 7 covering from a rear side of seat back 2 to a bottom side of seat part 4 of seat 1, and flexible heater 8 disposed in the rear side of cover 7 in-between cover 7 and seat 1. With this configuration, a single heater realizes radiant heating of the lower legs to the feet of the back seat passenger.

### INDUSTRIAL APPLICABILITY

The seat heating device of the invention may be utilized for heating a vehicle seat as well as an auditorium seat.

### REFERENCE MARKS IN THE DRAWINGS

- 1: seat
- 2: seat back
- 4: seat part
- 7: cover
- 8: heater (heating member)
- 9: heat insulator (heat member)
- 9b: low friction member
- 10: elastic member
- 11: seat cover
- 12a, 12b: fitting part
- 14: radiant transmission part
- 14a: first constituent
- 14b: second constituent
- 14c: connecting constituent
- 14d: open lattice

## Claims

1. A seat heating device comprising:
a cover (7) adapted to cover a rear side of a seat back (2) through a bottom side of a seat part (4); and
a heater (8) being flexible and disposed behind the cover (7) adapted to be disposed between the cover (7) and the seat (1),
wherein the cover (7) has an opening (13) and a radiant transmission part (14) covering the opening (13).

2. The seat heating device of claim 1, wherein an end of the cover (7) is adapted to be attached to the rear side of the seat back (2) and the other end of the cover (7) adapted to be attached to the bottom side of the seat part (4) through an elastic member.

3. The seat heating device of claim 1,
wherein the heater (8) includes at least a heating member (8) and a heat insulator (9).

4. The heating device of claim 3,
wherein the heat insulator (9) is disposed on a side facing the seat back (2).

5. The seat heating device of claim 4,
wherein the heat insulator (9) further includes a low friction member (9b) disposed on the side facing the seat back (2).

6. The seat heating device of claim 1,
wherein the radiant transmission part (14) comprises:
a first constituent (14a) which is flexible and a sheet-like form;
a second constituent (14b) which is flexible and a mesh-like form; and
a plurality of connecting constituents (14c) connecting the first constituent (14a) and the second constituent (14b) with a space therebetween.

7. A vehicle installed with the seat heating device of claim 1.

## Patentansprüche

1. Sitzheizvorrichtung, die Folgendes umfasst:
eine Abdeckung (7), die ausgelegt ist, eine Rückseite einer Sitzlehne (2) von der Unterseite eines Sitzelements (4) aus zu bedecken; und
ein Heizelement (8), das biegsam ist und hinter der Abdeckung (7) angeordnet ist, das so ausgelegt ist, dass es zwischen der Abdeckung (7) und dem Sitz (1) angeordnet wird,
wobei die Abdeckung (7) eine Öffnung (13) und ein Strahlungsübertragungselement (14), das die Öffnung (13) bedeckt, aufweist.

2. Sitzheizvorrichtung nach Anspruch 1,
wobei ein Ende der Abdeckung (7) so ausgelegt ist, dass es an der Rückseite der Sitzlehne (2) befestigt werden kann, und das andere Ende der Abdeckung (7) so ausgelegt ist, dass es an der Unterseite des Sitzelements (4) mittels eines elastischen Elements befestigt werden kann.

3. Sitzheizvorrichtung nach Anspruch 1,
wobei das Heizelement (8) wenigstens ein Heizelement (8) und eine Wärmeisolierung (9) umfasst.

4. Heizvorrichtung nach Anspruch 3,
wobei die Wärmeisolierung (9) an einer Seite angeordnet ist, die zu der Sitzlehne (2) zeigt.

5. Sitzheizvorrichtung nach Anspruch 4,
wobei die Wärmeisolierung (9) ferner ein Element (9b) mit geringer Reibung umfasst, das an der Seite angeordnet ist, die zu der Sitzlehne (2) zeigt.

6. Sitzheizvorrichtung nach Anspruch 1,
wobei das Strahlungsübertragungselement (14) Folgendes umfasst:
eine erste Komponente (14a), die biegsam ist und eine folienartige Form besitzt;
eine zweite Komponente (14b), die biegsam ist und eine netzartige Form besitzt; und
mehrere Verbindungskomponenten (14c), die die erste Komponente (14a) und die zweite Komponente (14b) mit einem Abstand dazwischen verbinden.

7. Fahrzeug, in das die Sitzheizvorrichtung nach Anspruch 1 eingebaut ist.

## Revendications

1. Dispositif de chauffage pour siège comprenant :
une couverture (7) conçue pour recouvrir un côté arrière d'un dossier de siège (2) par le biais d'un côté inférieur d'une partie de siège (4) ; et
un chauffage (8) étant flexible et disposé derrière la couverture (7) conçu pour être disposé entre la couverture (7) et le siège (1),
la couverture (7) présentant une ouverture (13) et une partie de transmission de rayonnement (14) recouvrant l'ouverture (13).

2. Dispositif de chauffage pour siège selon la revendication 1,
dans lequel une extrémité de la couverture (7) est conçue pour être attachée au côté arrière du dossier de siège (2) et l'autre extrémité de la couverture (7) conçue pour être attachée au côté inférieur de la partie de siège (4) par le biais d'un élément élastique.

3. Dispositif de chauffage pour siège selon la revendication 1,
dans lequel le chauffage (8) comprend au moins un élément de chauffage (8) et un isolant thermique (9).

4. Dispositif de chauffage selon la revendication 3,
dans lequel l'isolant thermique (9) est disposé sur un côté face au dossier de siège (2).

5. Dispositif de chauffage pour siège selon la revendication 4,
dans lequel l'isolant thermique (9) comprend en outre un élément à faible frottement (9b) disposé sur le côté face au dossier de siège (2).

6. Dispositif de chauffage pour siège selon la revendication 1,
dans lequel la partie de transmission de rayonnement (14) comprend :
un premier composant (14a) qui est flexible et une forme de type feuille ;
un deuxième composant (14b) qui est flexible et une forme de type maille ; et
une pluralité de composants de connexion (14c) connectant le premier composant (14a) et le deuxième composant (14b) avec un espace entre les deux.

7. Véhicule installé avec le dispositif de chauffage pour siège selon la revendication 1.
